(19) Europäisches Patentamt / European Patent Office / Office européen des brevets

(11) **EP 2 042 906 B1**

(12) **EUROPÄISCHE PATENTSCHRIFT**

(45) Veröffentlichungstag und Bekanntmachung des Hinweises auf die Patenterteilung:
**05.03.2014   Patentblatt 2014/10**

(51) Int Cl.:
**G02B 21/06** (2006.01)   **G02B 21/00** (2006.01)

(21) Anmeldenummer: **08016423.9**

(22) Anmeldetag: **18.09.2008**

(54) **Verfahren und Anordnung zur optischen tiefenaufgelösten Erfassung einer beleuchteten Probe**

Method and assembly for depth-resolved optical detection of an illuminated sample

Procédé et système pour la détection optique résolue en profondeur d'un échantillon illuminé

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**

(30) Priorität: **28.09.2007   DE 102007047465**

(43) Veröffentlichungstag der Anmeldung:
**01.04.2009   Patentblatt 2009/14**

(73) Patentinhaber: **Carl Zeiss Microscopy GmbH**
**07745 Jena (DE)**

(72) Erfinder:
• **Wolleschensky, Ralf**
**07743 Jena (DE)**
• **Kempe, Michael**
**07751 Jena (DE)**

(74) Vertreter: **Hampe, Holger**
**Carl Zeiss Jena GmbH**
**Konzernfunktion Recht und Patente**
**Patentabteilung**
**07740 Jena (DE)**

(56) Entgegenhaltungen:
**EP-A- 0 353 495       DE-A1- 10 155 002**
**DE-A1- 10 257 237**

**Beschreibung**

DE10155002 A1 beschreibt eine Anordnung zur optischen Erfassung einer Probe mit einer periodischen Struktur in einem Beleuchtungsstrahlengang mit linienförmiger Beleuchtung. EP 0353495 A2 beschreibt eine Anordnung zur Erzeugung eines optischen Bildkontrastes in einem simultanen konfokalen Mikroskop.

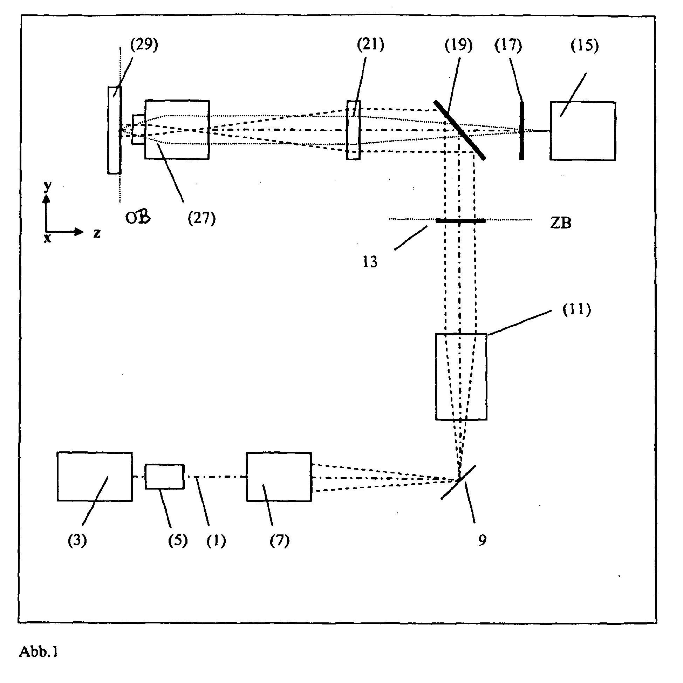

Die erfindungsgemäße Lösung gemäss Anspruch 1 ist ein linienscannendes Mikroskop mit ortsaufgelöster Detektion des gesamten Bildfeldes (siehe Abb. 1). Abb.1 zeigt den schematischen Aufbau des erfindungsgemäßen Mikroskops (1) Optische Achse, (3) Lichtquelle, (5) Schaltbarer Attenuator / AOM, (7) Linienformungsoptik, (9) Scanner mit Rotationsachse senkrecht zur Zeichenebene, (11) Scanoptik, (13) Maske mit periodischer Struktur in der einer zur Probe konjugierten Zwischenbildebene mit Mitteln für eine Translation senkrecht zur Zeichenebene und zur Rotation um die optische Achse, (15) Ortsauflösender Flächensensor, z.B. CCD, (17) Emissionsfilter, (19) Hauptfarbteiler, (21) Tubuslinse, (27) Mikroskopobjektiv, (29) Probe.

Im Detektionsstrahlengang in Richtung des vom Objekt (29) kommenden Lichtes befinden sich ein für einen unendlichen Strahlengang korrigiertes Objektiv (27), eine Tubuslinse (21), ein Hauptfarbteiler (19) zur Trennung von Beleuchtungs- und Detektionsstrahlengang, ein Emissionsfilter (17) und eine Kamera (15), vorzugsweise eine CCD Kamera. Im Anregungsstrahlengang der Lichtquelle (3) befindet sich eine Strahlformungseinheit (7), die den durch einen Modulator (5), beispielsweise einen AOM oder AOTF zur Intensitätssteuerung und/ oder Wellenlängenauswahl, intensitätsmodulierten Lichtstrahl der Lichtquelle (3) zu einer Linie formt. Durch eine vorteilhaft drehbare und zur Phasenverschiebung senkrecht zur optischen Achse verschiebbare periodische Struktur (13) in oder in der Nähe der Zwischenbildebene ZB, wobei die Struktur bevorzugt ein Phasengitter ist, wird die Linie in der Objektebene Obstrukturiert. Durch einen der Strahlformung nachgeordneten, aber der periodischen Struktur vorgeordneten Scanner (9) wird die linienförmige Lichtverteilung in der Zwischenbildebene ZB und der Objektebene Obsenkrecht zur Linienausdehnung gescannt. Die Linie ist in der Objektebene in der in Abb. 1 als x markierten Richtung ausgedehnt. Das Scanobjektiv (11) bildet die Linie auf die periodische Struktur ab, wobei sich der Scanner (9) in oder in der Nähe der konjugierten Pupillenebene des Objektives (27) befindet.

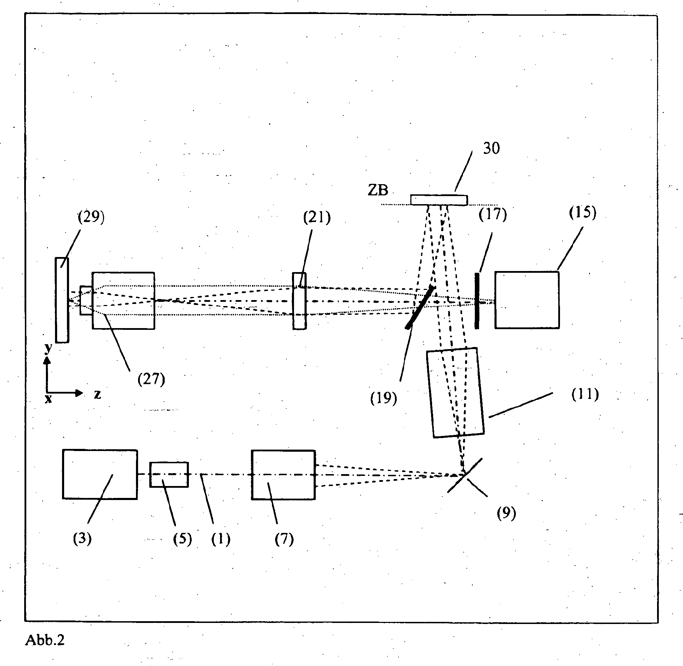

Die Struktur (13) kann alternativ zu einem mit Mitteln zur Rotation und Translation versehenen Gitter auch als elektronisch ansteuerbares Element, z.B. als LCD ausgeführt sein. Aufgrund der typischerweise besseren Effizienz solcher Elemente in reflektiver Anordnung kann der Einsatz eines solchen Elements die Umgestaltung des Anregungsstrahlengangs erfordern, wie schematisch in Abb. 2 gezeigt.

Abb. 2 zeigt den schematischen Aufbau des Mikroskops mit reflektivem Element zur Strukturierung. (1) ist Optische Achse, (3) die Lichtquelle, (5) ein Schaltbarer Attenuator / AOM, (7) die Linienformungsoptik, (9) der Scanner mit Rotationsachse senkrecht zur Zeichenebene, (11) die Scanoptik, (15) ein Ortsauflösender Flächensensor, z.B. CCD, (17) ein Emissionsfilter, (19) der Hauptfarbteiler, (21) die Tubuslinse, (27) das Mikroskopobjektiv, (29) die Probe, (30) ein reflektives Element (siehe auch weitere Darstellungen im Folgenden) zur Strukturierung in einer Zwischenbildebene.

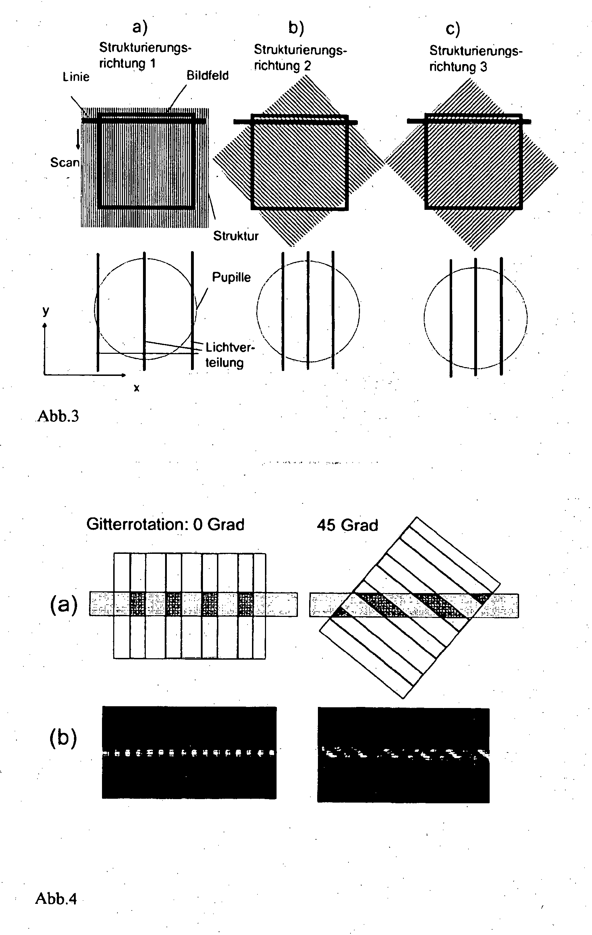

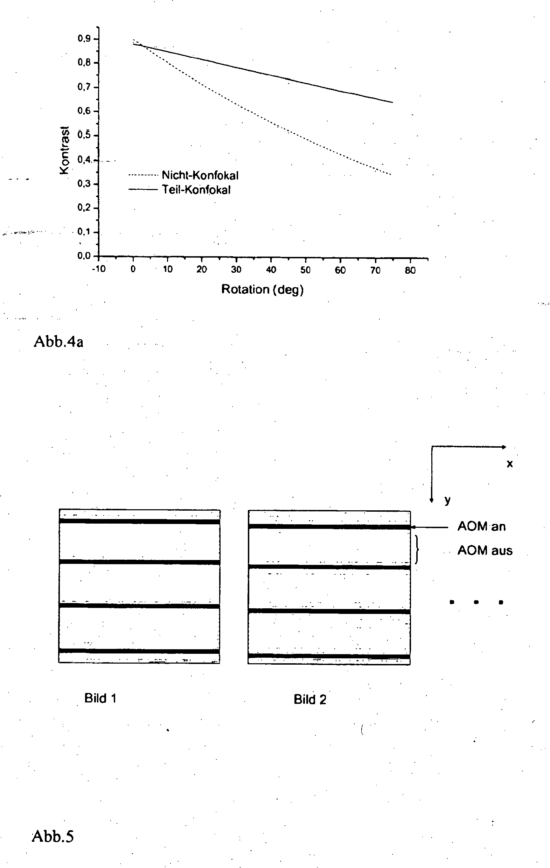

Die beschriebenen Anordnungen haben den besonderen Vorteil, dass nur die Strukturen der Elemente (13) in Abb. 1 (30) in Abb. 2 bewegt oder modifiziert werden müssen, um die Phase und Richtung der strukturierten Beleuchtung in der Probe zu ändern. Die Richtung der Linie und die Scanrichtung auf der Probe und dem Detektor bleiben unverändert. Das vereinfacht sowohl die Ansteuerung des Systems als auch die Auswertung der Bilder, besonders bei Verwendung einer virtuellen Spaltblendenfunktion (siehe Beschreibung zu Abb. 5). Zugleich werden mögliche Fehlerquellen eliminiert, da die Struktur der Beleuchtung in der Probe nur von der relativen Position der Struktur des Elements (13) bzw. (30) zur Probe (29) abhängt. Die relative Orientierung von Struktur, Bildfeld, Linie und Scanrichtung ist in Abb. 3 a)- c) schematisch gezeigt. In Abb. 3b) und Abb. 3c) ist die Struktur (13) beispielhaft jeweils um 45 Grad verdreht, im Uhrzeigersinn bzw. entgegen dem Uhrzeigersinn. Im unteren Bildteil ist jeweils das entstehende Beugungsbild in der Pupille dargestellt (für die "eingefrorene" Momentaufnahme der Scanlinie in einer beliebigen Linienposition).

Abb. 3 zeigt die Strukturierung der Beleuchtung in der Bildebene (oben) und der Pupillenebene (unten)

Die Kombination der oben beschriebenen Anordnungen mit den verschiedenen Methoden der virtuellen Spaltrealisierung zur Erzielung einer variablen, teilkonfokalen Detektion, wie in Abb. 5 beschrieben, ist möglich und gehört zum Raum der bevorzugten Lösungen. Dies beinhaltet gegebenenfalls das Hinzufügen eines weiteren Elements vor der Kamera (15) zur zeitlich mit den Scanprozeß synchronisierten Ablenkung der detektierten Linienverteilungen. Eine Besonderheit ergibt sich bei Strukturierung der Linie in der Nähe der Grenzfrequenz, wie es bei der strukturierten Beleuchtung zur Auflösungssteigerung vorliegt. In diesem Fall hat man am Ort der Struktur in oder in der Nähe des Zwischenbildes eine ähnliche Größe von der Periode der Strukturen und der Linienbreite. Die entsprechenden Verhältnisse sind schematisch in Abb. 3 gezeigt.

Abb. 4 zeigt die Überlagerung von Linie und Struktur in der Zwischenbildebene (a) und resultierende strukturierte Linie in der Objektebene (b) für zwei Orientierungen des Gitters.

In der Objektebene ergibt sich dadurch eine Verbreiterung der Linie im Vergleich zur beugungsbegrenzten Abbildung, die bei senkrechter Orientierung von Linie und periodischen Strukturen vorliegt. Beim Scannen der Linie über die Struktur erhält man zusätzlich eine Verringerung des Kontrastes der Strukturierung in der Objektebene mit zunehmender Rotation. Während die Linienverbreiterung kein grundsätzliches Problem darstellt, ist der Kontrastverlust für bestimmte Applikationen unvorteilhaft. Durch teil-konfokale Detektion wie im Zusammenhang mit Abb. 5 beschrieben kann dieser Kontrastverlust aber deutlich verringert werden, da auf der Linienmitte der Kontrast optimal ist. Dies ist in Abb. 4 dargestellt.

Abb. 4a zeigt den Kontrast in der strukturierten Beleuchtung in der Objektebene als Funktion der Gitterrotation.

Wie generell bei der strukturierten Beleuchtung ist es auch hier bei Fokussierung mit Objektiven hoher NA wichtig, die Polarisation zu beachten. Für maximalen Kontrast der Strukturierung sollte diese senkrecht zur Linie in einer Bildebene (in y-Richtung in Abb. 1 bis 3) orientiert sein. Ein Vorteil der hier beschriebenen Anordnung ist, dass keine Rotation der Polarisation für die Strukturierung in verschiedene Raumrichtungen erfolgen muss, da die Lage der Linie insbesondere zur Objektivpupille unverändert bleibt

Vorteilhafte Ausführung der Strukturierung der Beleuchtung

Wenn während eines linearen Scans des Scanners über eine Zeit $\Delta t$ die Kamera synchron ein Bild mit einer Belichtungszeit von mindestens $\Delta t$ einzieht, erhält man ein einem Weitfeldbild des Objektes äquivalentes Resultat. Dabei wird der außerfokale Untergrund ebenfalls mit detektiert. Eine konfokale Filterung wird vorteilhaft möglich, wenn durch den Modulator (5) synchron zum Scanvorgang bei der Aufnahme jedes Phasenbildes das zur Berechnung eines Schnittbildes gehört, in y-Richtung die Beleuchtung in gleicher Weise periodisch an- und ausgeschaltet wird.

Hierbei kann der Scanner neben der kontinuierlichen Scanbewegung mit Ein- und Ausschalten vorteilhaft auch in den ausgeschalteten Abschnitten schnell zur nächsten Position mit angeschalteter Beleuchtung bewegt werden, in der der beleuchtete Scanvorgang fortgesetzt wird. Die Bewegung könnte auch wie mit einem Schrittmotor schrittartig erfolgen.

Durch das erfindungsgemäße Verfahren ergibt sich eine in y-Richtung strukturierte Belichtung in der Kameraebene (siehe Abb. 5). Die Abstände zwischen den belichteten Zeilen der Kamera werden in einer vorteilhaften Ausprägung der Erfindung so gewählt, dass ein Übersprechen des außerfokalen Untergrundes bei der Beleuchtung einer Linie auf der Probe in die Region auf der Kamera , die der Beleuchtung der nächsten Linie in der Probe entspricht, minimiert wird. Bei Abtastung des Objektes nach dem Nyquist-Theorem ( halbe Breite der PSF) sollten empirisch M = 5 bis 10 Zeilen Abstand zwischen benachbarten Belichtungszeilen ausreichen. Im nächsten von der Kamera erfassten Bild wird dann das belichtete Zeilenmuster (bei beugungsbegrenzter Abbildung auf die Kamera überdeckt die Linienverteilung ungefähr zwei Empfängerzeilen) um vorzugsweise eine Zeile verschoben, was durch eine entsprechende Verzögerung beim Anschalten des Modulators erzielt wird. Es wird also beispielsweise zunächst die 1., 10., 20. etc. Zeile, dann die zweite, 11. und 21. etc. Zeile belichtet. Dieser Prozess wird so lange wiederholt, bis die Probe im Bildfeld einmal lückenlos abgetastet wurde, wobei als Resultat dieses Aufnahmevorganges M mal Anzahl der Phasenverschiebungen (vorzugsweise M mal 3) Bilder vorliegen.

Alternativ könnte für eine Zeilenabtastung zunächst die Aufnahme bei mehreren Phasenlagen der periodischen Struktur erfolgen und danach das Zeilenmuster der Abtastung verschoben werden.

Jedes dieser Bilder kann wiederum zusätzlich zur schon beschriebenen Verfahrensweise durch wiederholte Aufnahme, vorzugsweise mit möglichst geringer Intensität zur Probenschonung, mit gleichen Scanner-Einstellungen und anschließender Mittelung entstanden sein. Dieses Verfahren kann Artefakte aufgrund von Bleichvorgängen in der Probe reduzieren. Über die Verrechnung der M mal 3 Phasenbilder kann nun die Konfokalität eingestellt werden.

Insbesondere muss für die einzelnen Bilder der durch den Empfänger erfasste belichtete Untergrund zwischen den belichteten Empfängerzeilen herausgerechnet werden. Dieser ist auf dem Empfänger leicht zu identifizieren (Bereiche an denen eigentlich kein Licht sein dürfte).

Wenn alle Bilder einfach aufsummiert werden, erhält man ein dem Weitfeldbild entsprechendes Ergebnis. Die Aufsummierung der Bilder nach Selektion der Zeilen, die den entsprechenden beleuchteten Zeilen im Fokus des Objektes entsprechen, ergibt ein konfokales Bild. In diesem Schritt werden die zu den selektierten Zeilen komplementären (benachbarten) Bildbereiche wie beschrieben maskiert und nicht ausgewertet. Dies entspricht der Funktion einer virtuellen Spaltblende, da die nicht genutzten, maskierten Bildbereiche den Detektionsorten des außerfokalen Streulichtes entsprechen. Die Konfokalität kann dabei von 1 Airy Unit (2 Zeilen selektiert) bis M Airy-Units variiert werden (virtuelle Spaltblende).

Abb. 5: zeigt das Belichtungsmuster auf der Kamera für konfokale Detektion bei ein- und ausgeschaltetem Modulator (AOM).

Die Geschwindigkeit der Bildaufnahme wird dabei im Vergleich zur nichtkonfokalen Detektion um den Faktor M verringert. Wenn man einen Bildeinzug von 50 Bildern/s zugrunde legt, kann man bei M=5 ein vollständiges Bild (bei einer Phasenlage der Strukturierung) in 100 ms erhalten. Allerdings ist zu berücksichtigen, dass pro Strukturierungsrichtung N= 3 bis 5 Bilder mit verschiedenen Phasenlagen aufgenommen werden müssen. Im linearen Strukturierungsfall mit 3 Strukturierungsrichtungen ergeben sich daher typischerweise 9 Bilder [7], was bei M=5 zu einer Bildaufnahmezeit von ca. 1 s pro Ebene führt.

Eine etwas günstigere Situation ergibt sich, wenn Scanner (23) nicht gleichförmig (mit Geschwindigkeit $v_s$) über das Bildfeld scannt, sondern sich in den Zeiten mit ausgeschaltetem Laser mit Maximalgeschwindigkeit $v_{max}$ bewegt, Das stellt zwar höhere Anforderungen an die Steuerung und Synchronität der Scanner, erhöht die Bildaufnahmezeit aber um den Faktor

$$sf = \frac{M}{(M-1)\dfrac{v_s}{v_{max}}+1}$$

d.h. ungefähr um das M-fache (wenn $v_{max} \gg v_s$) bzw. bis zur maximalen Bildaufnahmerate der Kamera.

Eine Alternative zur sequentiellen Abtastung mit M Zeilenmustern, die es ermöglicht, anstelle der M Zeilenbilder ein einziges Bild einzuziehen und dennoch konfokale Detektion zu ermöglichen, soll im folgenden erwähnt werden. Dabei macht man sich die Tatsache zunutze, dass beim Linienscanner das Objekt sequentiell zeilenweise abgetastet wird. Das ermöglicht, im Detektionsstrahlengang durch ein weiteres Element eine zeilenweise Ablenkung des Detektionslichts zu realisieren, so dass auf dem Detektor ein Zeilenmuster wie in Abb. 5 entsteht, obwohl das Objekt kontinuierlich abgescannt wird. Um ein gesamtes Bild derart auf dem Detektor abzubilden ist die Voraussetzung, dass dieser M mehr Zeilen hat als für das Bild erforderlich. Ein typischer Wert sind 500 Zeilen pro Bild. Mit M = 5 ergibt sich eine erforderliche Detektorenzeilenzahl von 2500. Als Element zur Zeilenablenkung könnte z.B. eine Galvoscanner vor dem Detektor zur Anwendung kommen. Beispielsweise erzeugt der Scanner (24) mit derselben Ablenkachse wie der Scanner (9), der wie oben beschrieben für die Ablenkung in Y Richtung verantwortlich ist, beispielsweise 10 versetzte diskrete Scansprünge innerhalb einer Zeilenposition der sequentiellen Zeilenabtastung des Scanners (9), bevor dieser in die nächste detektierte Zeilenposition vorrückt. Der Scanner (9) kann dabei auch kontinuierlich scannen, während der Scanner vor dem Detektor immer diskret, mit einer hohen Ablenkgeschwindigkeit betrieben werden muss. Die Zeit $t_i$ zwischen den Scansprüngen mit einer Zeit $t_d$ entspricht dabei der effektiven Zeilenintegrationszeit auf der Kamera. Es muß mindestes $M \cdot t_d < t_i$ gelten.
Diese Scansprünge erzeugen auf dem Flächendetektor voneinander beabstandete Signale der beleuchteten Probe, die sinngemäß den voneinander beabstandeten Bereichen des Detektors entsprechen wie sie anhand insbesondere Abb. 5 weiter oben ausführlich erläutert wurden.
Wenn die Pixelgröße auf der Kamera 5 $\mu$m beträgt, so ergibt sich der maximale Ablenkungswinkel so, dass in dem oben aufgeführten Beispiel auf der Kamera ein Versatz von (2500-500)$\times$5$\mu$m = 10 mm entsteht. Dies entspricht bei einem Abstand der Kamera zum Scanner von 50 mm einem Scanwinkel von 5 Grad (für eine Ablenkung von 10 Grad).
Beispielsweise erzeugt dieser Scanner mit derselben Ablenkachse wie der Scanner (9), der wie oben beschrieben für die Ablenkung in Y Richtung verantwortlich ist, beispielsweise 10 versetzte diskrete Scansprünge innerhalb einer Zeilenposition der sequentiellen Zeilenabtastung des Scanners (9), bevor dieser in die nächste detektierte Zeilenposition vorrückt. Der Scanner (9) kann dabei auch kontinuierlich scannen, während Scanner (24) immer diskret, mit einer hohen Ablenkgeschwindigkeit betrieben werden muß. Die Zeit $t_i$ zwischen den Scansprüngen mit einer Zeit $t_d$ entspricht dabei der effektiven Zeilenintegrationszeit auf der Kamera. Es muß mindestes $M \cdot t_d < t_i$ gelten.
Diese Scansprünge erzeugen auf dem Flächendetektor voneinander beabstandete Signale der beleuchteten Probe, die sinngemäß den voneinander beabstandeten Bereichen des Detektors entsprechen wie sie anhand insbesondere Abb.3 weiter oben ausführlich erläutert wurden.

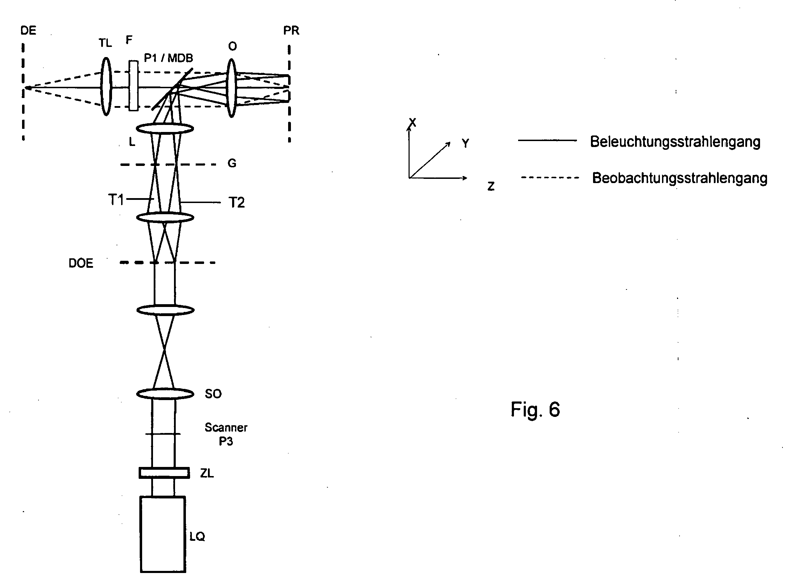

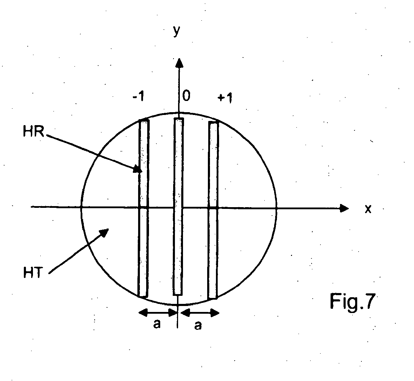

In Abb. 6 ist eine weitere Anordnung aus Lichtquelle LQ, Strahlformung ( Zylinderlinse ) ZL, Scanner P3, Scanoptik SO, strukturiertem Element G , Linse L , Hautfarbteiler MDB in der Objektivpupille, Objektiv O, Probe PR sowie detektionsseitig Filter F, Linse TL und Detektor DE dargestellt.
In einer zur Pupillenebene konjugierten Ebene ist ein diffraktiv optisches Element (DOE) zur Strahlformung angeordnet, das die mit ZL erzeugte Linie an das Gitter G ( Amplitudengitter )bezüglich seiner Periode anpasst, so dass das Beleuchtungslicht durch das Gitter hindurchpaßt und an den Gitteröffnungen konstruktive Interferenz auftritt. Vorteilhaft wird hierdurch der sonst auftretende 50-prozentige Verlust an einem Amplitudengitter vermieden.
Der Strahlteiler ist vorteilhaft wie in Abb. 7 dargestellt ausgebildet und weist hochreflektierende Bereiche HR auf, auf die mittels L in Abb. 6 die Beugungsordnungen abgebildet werden und in Richtung der Probe PR gelangen.

Der übrige Bereich des Strahlteilers MDB ist transmittierend ausgebildet so dass das Probenlicht in Richtung des Detektors DE gelangt.

Auf die Offenbarung von DE 10257237 A1 wird verwiesen.

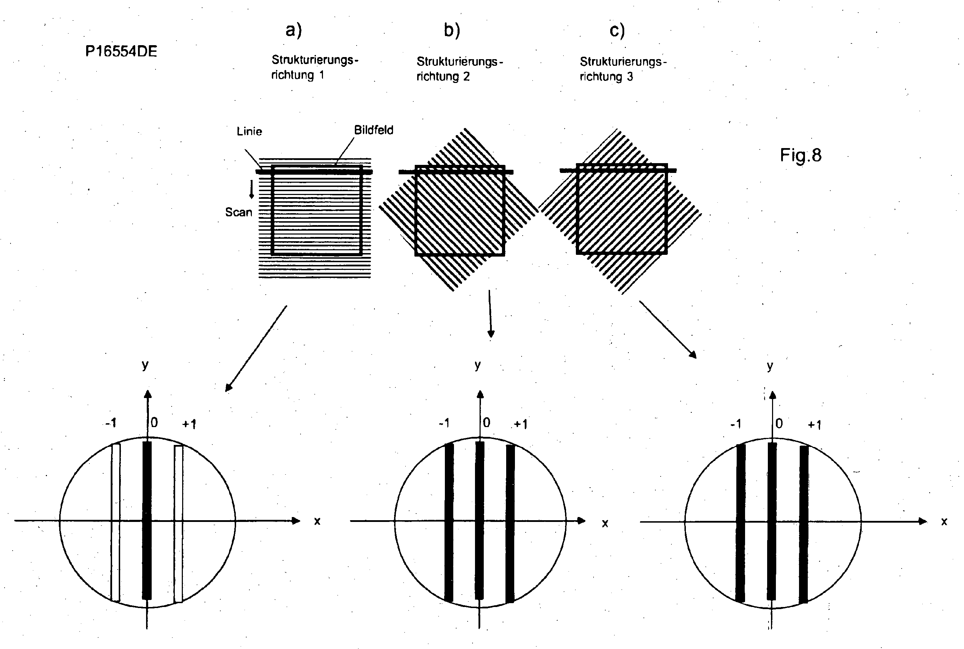

In Abb. 8 ist analog Abb. 3 bei verdrehter Strukturrichtung unter Verwendung des MDB nach Abb. 7 die Lichtverteilung in der Objektivpupille (Ebene des MDB) dargestellt. In Abb. 8a) ist die Strukturierungsrichtung parallel zur Linienorientierung in der Probe. Daher gibt es nur die 0. Beugungsordnung, die als dunkle Linie in der konjugierten Pupillenebene dargestellt ist. Bei gedrehter Strukturierung (wofür G und DOE gemeinsam rotiert werden) treten zusätzlich die $\pm 1$. Beugungsordnung auf, die bei bevorzugter symmetrischer Rotation um die Lage von a) an der gleichen Stelle in der Pupille liegen und von den reflektiven Bereichen des MDB reflektiert werden können.

Alternativ kann das strukturierte Element G auch als Phasengitter ausgelegt sein. In dem Fall muß die Strukturierung in γ-Richtung wie in Abb. 8a) dargestellt durch ein zur Scanbewegung synchrones Schalten der Beleuchtung erzielt werden. In diesem Fall kann das DOE und die beiden angrenzenden Linsen entfallen und das Element G direkt in das von SO erzeugte Zwischenbild gestellt werden.

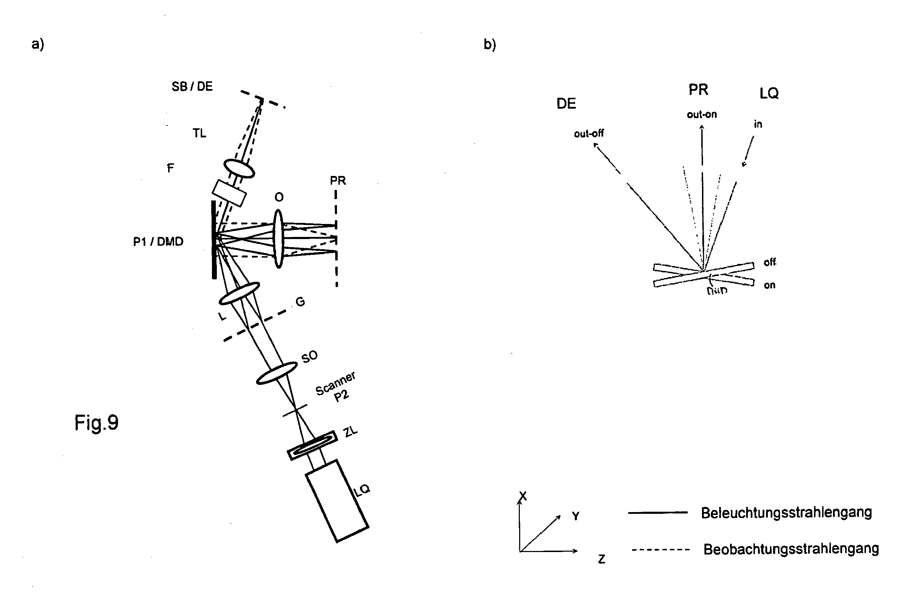

In Fig.9 ist der Teiler MDB als DMD (digital mirror device) ausgebildet und in der Pupillenebene angeordnet.

Durch entsprechende Schaltung der Mikrospiegel können beliebige Lichtverteilungen, die durch Drehung der Struktur G entstehen, in Richtung der Probe umgelenkt werden (PR out-on in 8b) während das Probenlicht über nicht geschaltete Spiegel (DE out-off in 8b) in Richtung der Detektion DE gelangt (bei entsprechend optimierter Anordnung des DMD zur Beleuchtung/Detektion).

Die Erfindung ist nicht nur an die beschriebenen Ausführungen gebunden.

Im fachmännischen Rahmen können Modifikationen und Veränderungen von den erfinderischen Gedanken erfasst sein.

## Patentansprüche

1. Anordnung zur optischen tiefenaufgelösten Erfassung einer Probe (29,PR),
umfassend
Mittel (7, ZL) zur linenförmigen Strahlformung des Beleuchtungslichtes sowie Mittel (13,G) zur Erzeugung einer periodischen Struktur in mindestens einer Raumrichtung des Beleuchtungslichtes im Beleuchtungsstrahlengang,
Scanmittel (9, P3),
wobei die Mittel (13,G) zur Erzeugung der Struktur in Richtung der Beleuchtung den Scanmitteln (9, P3) nachgeordnet sind,
wobei die linienförmige Lichtverteilung des Beleuchtungslichtes in der Richtung der Linienausdehnung strukturiert ist und die linienförmige Lichtverteilung des Beleuchtungslichtes in der Objektebene senkrecht zur Lichtausdehnung gescannt wird,
ein Objektiv (27,O),
Mittel (15,DE) zur Detektion des von der Probe (29,PR) kommenden Lichtes und zur Erzeugung von Bildern der Probe (29,PR) und zur Berechnung mindestens einen optischen Schnittbildes mit erhöhter Auflösung aus den Bildern,
**dadurch gekennzeichnet dass**
das durch die Mittel (13,G) zur Erzeugung der Struktur erzeugte Beugungsbild in oder in die Nähe der Objektivpupille abgebildet wird und sich dort ein Strahlteiler (MDB) mit hochreflektierenden Bereichen (-1,0,+1) für die nullte und +/- erste Beugungsordnung befindet der das Beugungsbild in Richtung der Probe (29,PR) reflektiert und ansonsten transmittierend zur Übertragung des von der Probe (29,PR) kommenden Lichtes in Richtung der Detektion ausgebildet ist
oder der Strahlteiler (MDB) ein schaltbares Spiegelarray, vorzugsweise ein DMD ist, wobei durch Schaltung erster Mikrospiegel das Beugungsbild der nullten und +/- ersten Beugungsordnung in Richtung der Probe (29,PR) übertragen wird und durch Schaltung zweiter Mikrospiegel das Probenlicht in Richtung der Detektion reflektiert wird.

2. Anordnung nach Anspruch 1, wobei
die Scanmittel (9,P3) zwischen den Mitteln (7,ZL) zur Strahlformung und Mitteln (13,G) zur Strukturierung angeordnet sind.

3. Anordnung nach einem der vorangehenden Ansprüche, wobei
Mittel zur Rotation der Struktur und der Änderung der Phasenlage vorgesehen sind.

4. Anordnung nach einem der vorangehenden Ansprüche, wobei
die Mittel (13,G) zur Erzeugung der Struktur in einem Zwischenbild zwischen den Scanmitteln (9,P3) und dem Objektiv (27,O) vorgesehen sind.

5. Anordnung nach einem der vorangehenden Ansprüche, wobei
die Mittel (13,G) zur Erzeugung der Struktur transmittierend oder reflektierend ausgebildet sind.

6. Anordnung nach einem der vorangehenden Ansprüche, wobei die
Mittel (13,G) Amplituden- oder Phasengitter oder eine Interferenzverteilung sind.

7. Anordnung nach einem der vorangehenden Ansprüche, wobei
die Polarisation des Beleuchtungslichtes synchron mit der Rotation der periodischen Struktur erfolgt.

8. Anordnung nach einem der vorangehenden Ansprüche, wobei
das Mittel (15,DE) zur Detektion ein Flächendetektor oder eine Kamera zur nichtdescannten Detektion des Probenlichtes ist
und wobei Mittel (5) zur Lichtunterbrechung während des Abtastvorgangs vorgesehen sind, um zwischen beleuchteten Probenbereichen einen Zwischenraum zu erzeugen und / oder auf dem Flächendetektor zwischen mit Detektionslicht aus dem beleuchteten Probenbereich belichteten Zeilen Zwischenräume zu erzeugen.

9. Anordnung nach Anspruch 8,

wobei das Mittel (5) zur Lichtunterbrechung im Beleuchtungsstrahlengang vorgesehen ist.

**10.** Anordnung nach Anspruch 8 oder 9,
wobei ein elektro- oder akustooptischer Modulator (5) zur Lichtunterbrechung vorgesehen ist.

**11.** Anordnung nach Anspruch 8, wobei
das Scanmittel (9,P3) im Detektionsstrahlengang vorgesehen ist um während des linienweisen Abtastvorgangs das Probenlicht auf dem Detektor (15,DE) linienweise diskret oder kontinuierlich auf dem Detektor aufzuspreizen.

**12.** Verfahren zur optischen tiefenaufgelösten Erfassung einer Probe (29,PR),
wobei die Probe (29,PR) oder mindestens ein Probenteil mittels linienförmiger Beleuchtung durch Scanmittel (9,P3) gescannt wird,
eine linienförmige Strahlformung des Beleuchtungslichtes erfolgt
und das Beleuchtungslicht eine vorzugsweise periodische Struktur in mindestens einer Raumrichtung aufweist,
wobei die linienförmige Lichtverteilung des Beleuchtungslichtes in der Richtung der Linienausdehnung strukturiert wird und die linienförmige Lichtverteilung des Beleuchtungslichtes in der Objektebene senkrecht zur Lichtausdehnung gescannt wird,
von der Probe (29,PR) kommendes Licht detektiert und daraus Bilder der Probe erzeugt werden,
aus den Bildern mindestens ein optisches Schnittbild durch die Probe und/ oder ein Bild mit erhöhter Auflösung berechnet wird,
die Erzeugung der Struktur des Beleuchtungslichtes nach seinem Durchgang durch die Scanmittel (9,P3) erfolgt
**dadurch gekennzeichnet dass**
das durch die Mittel (13,G) zur Erzeugung der Struktur erzeugte Beugungsbild in oder in die Nähe der Objektivpupille abgebildet wird und sich dort ein Strahlteiler (MDB) mit hochreflektierenden Bereichen (-1,0,+1) für die nullte und +/- erste Beugungsordnung befindet der das Beugungsbild in Richtung der Probe (29,PR) reflektiert und ansonsten transmittierend zur Übertragung des von der Probe (29,PR) kommenden Lichtes in Richtung der Detektion ausgebildet ist
oder der Strahlteiler ein schaltbares Spiegelarray, vorzugsweise ein DMD ist, wobei durch Schaltung erster Mikrospiegel das Beugungsbild der nullten und +/- ersten Beugungsordnung in Richtung der Probe übertragen wird und durch Schaltung zweiter Mikrospiegel das Probenlicht in Richtung der Detektion reflektiert wird.

**13.** Verfahren nach Anspruch 14, wobei zunächst eine Strahlformung, dann der Durchgang durch die Scanmittel (9,P3) und dann die Strukturierung erfolgt.

**14.** Verfahren nach einem der vorangehenden Ansprüche,
wobei eine Rotation der Struktur und eine Änderung der Phasenlage erfolgt.

**15.** Verfahren nach einem der vorangehenden Ansprüche,
wobei die Erzeugung der Struktur durch transmittierende oder reflektierende Mittel erfolgt.

**16.** Verfahren nach einem der vorangehenden Ansprüche,
wobei die Polarisation des Beleuchtungslichtes synchron mit der Rotation der periodischen Struktur erfolgt.

**17.** Verfahren nach einem der vorangehenden Ansprüche,
wobei auf einem Flächendetektor oder einer Kamera zur zeilenweisen nicht descannten Detektion zwischen mit Detektionslicht aus dem beleuchteten Probenbereich belichteten Zeilen Zwischenräume erzeugt werden.

**18.** Verfahren nach einem der vorangehenden Ansprüche,
wobei bei der linienweisen Beleuchtung und Detektion die Beleuchtung mehrfach an- und ausgeschaltet wird.

**19.** Verfahren nach einem der vorangehenden Ansprüche,
wobei eine wiederholte Lichtunterbrechung bei der Probenabtastung derart erfolgt, dass zwischen zwei beleuchteten Probenteilen ein Zwischenraum besteht.

**20.** Verfahren nach einem der vorangehenden Ansprüche, zur konfokalen Bilderzeugung,
wobei eine Berechnung eines Bildes durch teilweise oder vollständige Maskierung der Zwischenräume zwischen den belichteten Probenbereichen zugeordneten Kamerabereichen und Verrechnung der so gewonnenen Bilder erfolgt.

**21.** Verfahren nach Anspruch 20,
wobei die Verrechnung derart erfolgt, benachbart abgetastete Probenbereiche im verrechneten Bild richtig skaliert benachbart zugeordnet sind.

**22.** Verfahren nach einem der vorangehenden Ansprüche,
wobei während eines Scanvorgangs vor dem Detektor eine weitere Lichtablenkung in Richtung der Abtastung der Probe durch die Linie erfolgt.

**23.** Verfahren nach einem der vorangehenden Ansprüche,
wobei die Geschwindigkeit der Lichtablenkung größer als die Geschwindigkeit der Relativbewegung zwischen Probe und Beleuchtungslicht ist.

**24.** Verfahren nach einem der vorangehenden Ansprüche,
wobei die Lichtablenkung schrittweise erfolgt.

**25.** Verfahren nach einem der vorangehenden Ansprüche,
wobei die Lichtablenkung kontinuierlich erfolgt.

**26.** Verfahren und Anordnung nach einem der vorangehenden Ansprüche in einem Laser-Scanning- Mikroskop.


**Claims**

**1.** Arrangement for optical depth-resolved detection of a sample (29, PR),
comprising
means (7, ZL) for line-shaped beam forming of the illumination light and
means (13, G) for generating a periodic structure in at least one spatial direction of the illumination light in the illumination beam path,
scanning means (9, P3),
wherein the means (13, G) for generating the structure in the direction of the illumination are arranged downstream of the scanning means (9, P3),
wherein the line-shaped light distribution of the illumination light is structured in the direction of the extent of the lines and the line-shaped light distribution of the illumination light is scanned perpendicular to the extent of the light in the object plane,
an objective (27, O),
means (15, DE) for detecting the light coming from the sample (29, PR)
and for generating images of the sample (29, PR) and for calculating at least one optical sectional image with an increased resolution from the images,
**characterized in that**
the diffraction image generated by the means (13, G) for generating the structure is imaged in or in the vicinity of the objective pupil and a beam splitter (MDB) with highly reflective regions (-1, 0, +1) for the zeroth and +/- first order of diffraction is situated there, which beam splitter reflects the diffraction image in the direction of the sample (29, PR) and is otherwise configured as transmitting for transmitting the light coming from the sample (29, PR) in the direction of the detection
or the beam splitter (MDB) is a switchable mirror array, preferably a DMD, wherein, by switching first micro-mirrors, the diffraction image of the zeroth and +/- first order of diffraction is transmitted in the direction of the sample (29, PR), and, by switching second micro-mirrors, the sample light is reflected in the direction of the detection.

**2.** Arrangement according to Claim 1, wherein
the scanning means (9, P3) are arranged between the means (7, ZL) for beam forming and means (13, G) for structuring.

**3.** Arrangement according to one of the preceding claims, wherein
provision is made for means for rotating the structure and changing the phase.

**4.** Arrangement according to one of the preceding claims, wherein
the means (13, G) for generating the structure in an intermediate image are provided between the scanning means (9, P3) and the objective (27, 0).

**5.** Arrangement according to one of the preceding claims, wherein
the means (13, G) for generating the structure are configured to be transmitting or reflecting.

**6.** Arrangement according to one of the preceding claims, wherein the
means (13, G) are amplitude or phase gratings or an interference distribution.

**7.** Arrangement according to one of the preceding claims, wherein
the illumination light is polarized synchronously with the rotation of the periodic structure.

**8.** Arrangement according to one of the preceding claims, wherein
the means (15, DE) for detection is a planar detector or a camera for non-descanned detection of the sample light
and wherein provision is made for means (5) for interrupting the light during the scanning process in order to create an interspace between illuminated sample regions and/or to create interspaces between lines exposed to detection light from the illuminated sample region on the planar detector.

**9.** Arrangement according to Claim 8,
wherein the means (5) for interrupting the light is provided in the illumination beam path.

**10.** Arrangement according to Claim 8 or 9,
wherein an electro-optic or acousto-optic modulator (5) is provided for interrupting the light.

**11.** Arrangement according to Claim 8, wherein
the scanning means (9, P3) is provided in the detection beam path in order to spread the sample light on the detector (15, DE) in a line-by-line manner discretely or continuously during the line-by-line scanning process.

12. Method for optical depth-resolved detection of a sample (29, PR),
wherein the sample (29, PR) or at least one sample part is scanned by means of line-shaped illumination by scanning means (9, P3),
there is a line-shaped beam forming of the illumination light
and the illumination light has a preferably periodic structure in at least one spatial direction,
wherein the line-shaped light distribution of the illumination light is structured in the direction of the extent of the lines and the line-shaped light distribution of the illumination light is scanned in the object plane perpendicular to the extent of the light,
light coming from the sample (29, PR) is detected and images of the sample are generated therefrom,
at least one optical sectional image through the sample and/or one image with increased resolution is calculated from the images,
the structure of the illumination light is generated after the latter has passed through the scanning means (9, P3),
**characterized in that**
the diffraction image generated by the means (13, G) for generating the structure is imaged in or in the vicinity of the objective pupil and a beam splitter (MDB) with highly reflective regions (-1, 0, +1) for the zeroth and +/- first order of diffraction is situated there, which beam splitter reflects the diffraction image in the direction of the sample (29, PR) and is otherwise configured as transmitting for transmitting the light coming from the sample (29, PR) in the direction of the detection
or the beam splitter is a switchable mirror array, preferably a DMD,
wherein, by switching first micro-mirrors, the diffraction image of the zeroth and +/- first order of diffraction is transmitted in the direction of the sample, and, by switching second micro-mirrors, the sample light is reflected in the direction of the detection.

13. Method according to Claim 12, wherein there first is beam forming, then the passage through the scanning means (9, P3) and then the structuring.

14. Method according to one of the preceding claims, wherein there is a rotation of the structure and a change in the phase.

15. Method according to one of the preceding claims, wherein the structure is generated by transmitting or reflecting means.

16. Method according to one of the preceding claims, wherein the illumination light is polarized synchronously with the rotation of the periodic structure.

17. Method according to one of the preceding claims, wherein interspaces between lines exposed to detection light from the illuminated sample region are generated on a planar detector or on a camera for line-by-line non-descanned detection.

18. Method according to one of the preceding claims, wherein the illumination is repeatedly switched on and off during line-by-line illumination and detection.

19. Method according to one of the preceding claims, wherein there is repeated interruption of light during the sample scanning in such a way that there is an interspace between two illuminated sample parts.

20. Method according to one of the preceding claims, for confocal image generation, wherein there is a calculation of an image by partial or complete masking of the interspaces between the camera regions assigned to exposed sample regions and there is a calculation of the images obtained thus.

21. Method according to Claim 20, wherein the calculation is such that sample regions scanned adjacent to one another are assigned next to one another with the right scale in the calculated image.

22. Method according to one of the preceding claims, wherein, during a scanning process, there is a further light deflection in the direction of the scanning of the sample by the line upstream of the detector.

23. Method according to one of the preceding claims, wherein the speed of the light deflection is greater than the speed of the relative movement between sample and illumination light.

24. Method according to one of the preceding claims, wherein the light deflection occurs step-by-step.

25. Method according to one of the preceding claims, wherein the light deflection occurs continuously.

26. Method and arrangement according to one of the preceding claims in a laser scanning microscope.

**Revendications**

1. Arrangement de détection optique avec résolution en profondeur d'un échantillon (29, PR), comprenant des moyens (7, ZL) de formage de rayon linéaire de la lumière d'éclairage ainsi que

des moyens (13, G) de génération d'une structure périodique dans au moins une direction spatiale de la lumière d'éclairage dans le trajet du rayon d'éclairage,

des moyens de balayage (9, P3),

les moyens (13, G) de génération de la structure étant disposés après les moyens de balayage (9, P3) dans la direction de l'éclairage,

la distribution linéaire de la lumière d'éclairage dans la direction de l'expansion de la lumière étant structurée et la distribution linéaire de la lumière d'éclairage dans le plan de l'objet étant balayée perpendiculairement à l'expansion de la lumière,

un objectif (27, O),

des moyens (15, DE) pour détecter la lumière en provenance de l'échantillon (29, PR)

et pour générer des images de l'échantillon (29, PR) et pour calculer au moins une image de coupe optique à résolution accrue à partir des images,

**caractérisé en ce que**

l'image de diffraction générée par les moyens (13, G) de génération de la structure est représentée dans ou à proximité de la pupille de l'objectif et il se trouve ici un séparateur de faisceau (MDB) ayant des zones fortement réfléchissantes (-1, 0, +1) pour l'ordre de diffraction mis à zéro et le premier ordre de diffraction +/-, lequel réfléchit l'image de diffraction en direction de l'échantillon (29, PR) et pour le reste est configuré transmissif pour la transmission de la lumière en provenance de l'échantillon (29, PR) en direction de la détection ou le séparateur de faisceau (MDB) est un réseau de miroirs commutable, de préférence une matrice de micro-miroirs (DMD), l'image de diffraction de l'ordre de diffraction mis à zéro et du premier ordre de diffraction +/- étant transmise en direction de l'échantillon (29, PR) en commutant des premiers micro-miroirs et la lumière de l'échantillon étant réfléchie en direction de la détection en commutant des deuxièmes micro-miroirs.

2. Arrangement selon la revendication 1, avec lequel les moyens de balayage (9, P3) sont disposés entre les moyens (7, ZL) de formage de rayon et les moyens (13, G) de structuration.

3. Arrangement selon l'une des revendications précédentes, avec lequel sont prévus des moyens de rotation de la structure et de modification de la phase.

4. Arrangement selon l'une des revendications précédentes, avec lequel les moyens (13, G) de génération de la structure sont prévus dans une image intermédiaire entre les moyens de balayage (9, P3) et l'objectif (27, O).

5. Arrangement selon l'une des revendications précédentes, avec lequel les moyens (13, G) de génération de la structure sont réalisés transmissifs ou réfléchissants.

6. Arrangement selon l'une des revendications précédentes, avec lequel les moyens (13, G) sont une grille d'amplitude ou de phase ou une distribution d'interférence.

7. Arrangement selon l'une des revendications précédentes, avec lequel la polarisation de la lumière d'éclairage est effectuée de manière synchrone avec la rotation de la structure périodique.

8. Arrangement selon l'une des revendications précédentes, avec lequel
les moyens (15, DE) de détection sont un détecteur à jonction ou une caméra de détection sans balayage inverse de la lumière de l'échantillon
et avec lequel des moyens (5) sont prévus pour interrompre la lumière pendant l'opération de palpage afin de générer un espace intermédiaire entre les zones éclairées de l'échantillon et/ou générer des espaces intermédiaires sur le détecteur à jonction entre les lignes éclairées avec la lumière de détection en provenance de la zone éclairée de l'échantillon.

9. Arrangement selon la revendication 8, avec lequel les moyens (5) d'interruption de la lumière sont prévus dans le trajet du rayon d'éclairage.

10. Arrangement selon la revendication 8 ou 9, avec lequel un modulateur électro- ou acousto-optique (5) est prévu pour l'interruption de la lumière.

11. Arrangement selon la revendication 8, avec lequel les moyens de balayage (9, P3) sont prévus dans le trajet du rayon de détection afin de déployer la lumière de l'échantillon sur le détecteur (15, DE) ligne par ligne de manière discrète ou continuelle sur le détecteur pendant l'opération de palpage ligne par ligne.

12. Procédé de détection optique avec résolution en profondeur d'un échantillon (29, PR),
l'échantillon (29, PR) ou au moins une partie de l'échantillon étant balayé(e) au moyen d'un éclairage linéaire par des moyens de balayage (9, P3),
un formage de rayon linéaire de la lumière d'éclairage étant effectué
et la lumière d'éclairage présentant une structure de préférence périodique dans au moins une direction spatiale,
la distribution linéaire de la lumière d'éclairage dans la direction de l'expansion de la lumière étant structurée et la distribution linéaire de la lumière d'éclairage dans le plan de l'objet étant balayée perpendiculairement à l'expansion de la lumière,

la lumière en provenance de l'échantillon (29, PR) étant détectée et des images de l'échantillon étant générées à partir de celle-ci,

au moins une image de coupe optique à travers l'échantillon et/ou une image à résolution accrue étant calculée à partir des images,

la génération de la structure de la lumière d'éclairage étant effectuée après son passage à travers les moyens de balayage (9, P3),

**caractérisé en ce que**

l'image de diffraction générée par les moyens (13, G) de génération de la structure est représentée dans ou à proximité de la pupille de l'objectif et il se trouve ici un séparateur de faisceau (MDB) ayant des zones fortement réfléchissantes (-1, 0, +1) pour l'ordre de diffraction mis à zéro et le premier ordre de diffraction +/-, lequel réfléchit l'image de diffraction en direction de l'échantillon (29, PR) et pour le reste est configuré transmissif pour la transmission de la lumière en provenance de l'échantillon (29, PR) en direction de la détection ou le séparateur de faisceau est un réseau de miroirs commutable, de préférence une matrice de micro-miroirs (DMD), l'image de diffraction de l'ordre de diffraction mis à zéro et du premier ordre de diffraction +/- étant transmise en direction de l'échantillon en commutant des premiers micro-miroirs et la lumière de l'échantillon étant réfléchie en direction de la détection en commutant des deuxièmes micro-miroirs.

13. Procédé selon la revendication 12, selon lequel est tout d'abord effectué un formage de rayon, ensuite le passage à travers les moyens de balayage (9, P3) et ensuite la structuration.

14. Procédé selon l'une des revendications précédentes, selon lequel une rotation de la structure et une modification de la phase sont effectuées.

15. Procédé selon l'une des revendications précédentes, selon lequel la génération de la structure est réalisée par des moyens transmissifs ou réfléchissants.

16. Procédé selon l'une des revendications précédentes, selon lequel la polarisation de la lumière d'éclairage est effectuée de manière synchrone avec la rotation de la structure périodique.

17. Procédé selon l'une des revendications précédentes, selon lequel des espaces intermédiaires sont générés sur un détecteur à jonction ou une caméra de détection ligne par ligne sans balayage inverse entre les lignes éclairées avec la lumière de détection en provenance de la zone éclairée de l'échantillon.

18. Procédé selon l'une des revendications précédentes, selon lequel, lors de l'éclairage et de la détection ligne par ligne, l'éclairage est activé et désactivé plusieurs fois.

19. Procédé selon l'une des revendications précédentes, selon lequel une interruption répétée de la lumière est effectuée lors du palpage de l'échantillon de telle sorte qu'il se produit un espace intermédiaire entre deux parties éclairées de l'échantillon.

20. Procédé selon l'une des revendications précédentes, pour la génération d'images à foyer commun, selon lequel est effectué un calcul d'une image par masquage partiel ou total des espaces intermédiaires entre les zones de caméra associées aux zones éclairées de l'échantillon et une compensation des images ainsi obtenues.

21. Procédé selon la revendication 20, selon lequel la compensation est effectuée de telle sorte que les zones palpées voisines de l'échantillon dans l'image compensée sont associées avec une mise à l'échelle de voisinage correcte.

22. Procédé selon l'une des revendications précédentes, selon lequel, pendant une opération de balayage, une déviation supplémentaire de la lumière en direction du balayage de l'échantillon par la ligne est effectuée avant le détecteur.

23. Procédé selon l'une des revendications précédentes, selon lequel la vitesse de la déviation de la lumière est supérieure à la vitesse du déplacement relatif entre l'échantillon et la lumière d'éclairage.

24. Procédé selon l'une des revendications précédentes, selon lequel la déviation de la lumière s'effectue pas à pas.

25. Procédé selon l'une des revendications précédentes, selon lequel la déviation de la lumière s'effectue en continu.

26. Procédé et arrangement selon l'une des revendications précédentes dans un microscope à balayage laser.

Abb.1

11

Abb.2

a)
Strukturierungsrichtung 1

b)
Strukturierungsrichtung 2

c)
Strukturierungsrichtung 3

Linie    Bildfeld

Scan

Struktur

Pupille

y

Lichtverteilung

x

Abb.3

Gitterrotation: 0 Grad          45 Grad

(a)

(b)

Abb.4

Abb.4a

Bild 1          Bild 2

Abb.5

Beleuchtungsstrahlengang

Beobachtungsstrahlengang

Fig. 6

X Y Z

PR O G T2 SO Scanner P3 ZL LQ DE TL F P1/MDB L T1 DOE

Fig.7

a)

Strukturierungsrichtung 1

b)

Strukturierungsrichtung 2

c)

Strukturierungsrichtung 3

Linie          Bildfeld

Scan

Fig.8

y

-1    0    +1

x

y

-1    0    +1

x

y

-1    0    +1

x

Fig.9

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10155002 A1
- EP 0353495 A2
- DE 10257237 A1